# EUROPEAN PATENT APPLICATION

(11) **EP 4 364 940 A1**
(43) Date of publication of application: **08.05.2024**
(21) Application number: 23205784.4
(22) Date of filing: 25.10.2023
(51) Int. Cl.: B32B 17/10, C08F 210/00

(54) **IONOMER COMPOSITION CONTAINING MASTERBATCH AND GLASS LAMINATE PRODUCED USING THE SAME**

(30) Priority: 04.11.2022 KR 20220145694
(71) Applicant: SK Innovation Co., Ltd., Seoul 03188 (KR); SK Geo Centric Co., Ltd., Jongno-gu Seoul 03161 (KR)
(72) Inventor: LEE, Sang Yeup, 34124 Daejeon (KR); Marro Bellot, Cristian, 03161 Seoul (KR); KWON, Soon Min, 34124 Daejeon (KR)
(74) Representative: Frick, Robert

(57) **Abstract**

The present invention relates to an ionomer composition containing a masterbatch and a glass laminate produced using the same. Specifically, a masterbatch obtained by melt-kneading a zinc ionomer and a coupling agent is used, such that a crosslinking side reaction, which has been a problem in the related art, may be effectively suppressed, and as a result, an ionomer composition and a glass laminate that have significantly improved transparency, processability, and an adhesive strength to glass may be produced.

## Description

### TECHNICAL FIELD

The present invention relates to an ionomer composition containing a masterbatch and a glass laminate produced using the same.

### BACKGROUND

An ionomer is a thermoplastic plastic containing both a covalent bond and an ionic bond, and representative examples thereof include ethylene-based ionomers such as an ethylene-methacrylic acid copolymer or an ethylene-acrylic acid copolymer. In general, the ionomer is used in a food packaging film, a tray, a pouch, glass, and a container for adhesive and coating purposes.

In particular, an ionomer having excellent transparency is prepared by increasing a content of acrylic acid or methacrylic acid component in the ethylene-methacrylic acid copolymer or the ethylene-acrylic acid copolymer or increasing a degree of neutralization with a metal salt, and the prepared ionomer is also applied to transparent materials such as an intermediate layer of laminated glass, a solar cell encapsulation layer, and a transparent container. In addition, the transparency varies depending on the type of metal salt, and a sodium (Na) ionomer is mainly used as a highly transparent ionomer. However, since a sodium metal ion of the sodium ionomer exhibits a strong cohesive force and interacts with surrounding acrylic acid or methacrylic acid, there is a problem of poor adhesion to glass due to a small amount of excess acid groups.

In order to solve the above problem, when a silane coupling agent that improves adhesion to glass is added, an excessive crosslinking side reaction between the sodium ionomer and the coupling agent occurs, resulting in a significant decrease in melt flow index and an excessive increase in haze.

Meanwhile, a zinc (Zn) ionomer interacts with only a part of the surrounding acrylic acid or methacrylic acid depending on a determined acid value or coordination number, and as a result, more excess acid groups remain than the sodium ionomer. For this reason, the zinc ionomer may realize a stronger adhesive strength than the sodium ionomer not only to a glass plate but also to an aluminum foil, a metal surface, and components such as hydroxide and cellulose on a paper surface. However, transparency of the zinc ionomer is inferior to that of the sodium ionomer.

Therefore, there is a need for research and development on an ionomer composition having excellent transparency, processability, and adhesion to glass that may simultaneously realize the advantages of the sodium ionomer having excellent transparency and the advantages of the zinc ionomer having an excellent adhesive strength.

### SUMMARY

The present invention aims to providing an ionomer composition having excellent transparency, processability, and adhesion to glass by minimizing a crosslinking side reaction of a coupling agent, and a method of preparing the same.

The present further aims to providing a glass laminate having excellent transparency and adhesion and a method of producing the same.

The present invention is based on the finding that when a masterbatch was prepared by first mixing a zinc ionomer with a silane coupling agent, and then an ionomer composition containing the masterbatch and a sodium ionomer was prepared, a crosslinking side reaction of the silane coupling agent was effectively suppressed, and a melt flow index and a haze, which had deteriorated rapidly in the related art, showed excellent values, and at the same time, an adhesive strength to glass was improved.

Against this background, the invention relates to an ionomer composition containing a sodium ionomer; and a masterbatch containing a zinc ionomer and a coupling agent, wherein the sodium ionomer is contained in a higher content than the zinc ionomer.

According to an exemplary embodiment, the sodium ionomer and the zinc ionomer may be each independently an ethylene-(meth)acrylic acid ionomer.

According to an exemplary embodiment, the zinc ionomer may have a degree of neutralization with zinc metal of 5 to 50mol%.

According to an exemplary embodiment, the sodium ionomer may have a degree of neutralization with sodium metal of 10 to 60 mol%.

According to an exemplary embodiment, a weight ratio of the sodium ionomer to the zinc ionomer may be 4 to 20:1.

According to an exemplary embodiment, the coupling agent may contain an alkoxysilane-based compound.

According to an exemplary embodiment, the alkoxysilane-based compound may contain an amino group and a C₁₋₅ alkoxy group.

According to an exemplary embodiment, the alkoxysilane-based compound may be one or a combination of two or more selected from aminopropyldimethoxymethylsilane, aminopropyldiethoxymethylsilane, aminopropyldimethoxyethylsilane, aminopropyldiethoxyethylsilane, aminopropyldimethoxypropylsilane, and aminopropyldiethoxypropylsilane.

According to an exemplary embodiment, the coupling agent may be contained in an amount of 0.1 to 5 parts by weight with respect to 100 parts by weight of the zinc ionomer.

According to an exemplary embodiment, the masterbatch may be contained in an amount of 5 to 30 parts by weight with respect to 100 parts by weight of the sodium ionomer.

According to an exemplary embodiment, the ionomer composition may have a melt flow index of 0.5 to 10 g/10 min. when measured at a temperature of 190°C and a load of 2.16 kg according to ASTM D1238.

According to an exemplary embodiment, the ionomer composition may be used for an intermediate layer of laminated glass.

According to an exemplary embodiment, the ionomer composition may have an adhesive strength to glass of 50 N/cm or more when measured at a thickness of 1 mm.

According to an exemplary embodiment, when the ionomer composition is in a form of a film having a thickness of 1 mm, the ionomer composition may have a haze of 0.7% or less when measured according to ASTM D1003.

The invention further relates to a glass laminate including a first glass; an intermediate layer provided on the first glass and formed using the ionomer composition; and a second glass provided on the intermediate layer.

Yet further, the present invention relates to a method of preparing an ionomer composition includes: (a) preparing a masterbatch by melt-kneading a composition containing a zinc ionomer and a coupling agent; and (b) melt-kneading a sodium ionomer and the masterbatch.

According to an exemplary embodiment, in the step (a), the masterbatch may be in a state in which the coupling agent is uniformly dispersed inside the zinc ionomer.

According to an exemplary embodiment, a melt-kneading temperature in the step (a) may be lower than a melt-kneading temperature in the step (b).

Other features and aspects of the present invention will be apparent from the following detailed description, the drawings, and the claims.

### DETAILED DESCRIPTION OF EMBODIMENTS

Hereinafter, the present invention will be described in more detail.

The term (meth) acrylic acid used in the present specification may refer to methacrylic acid or acrylic acid.

In the related art, although additives such as a silane coupling agent were added to a sodium ionomer, which has excellent transparency but poor adhesion to glass or the like, to make up for the disadvantages, an excessive crosslinking side reaction occurred, resulting in rapid deterioration of processability, transparency, and molding quality.

The present invention is based on the finding that, in a method of preparing a masterbatch by first mixing a zinc ionomer with a silane coupling agent, and then preparing an ionomer composition by adding the masterbatch to a sodium ionomer, a crosslinking side reaction of the silane coupling agent can effectively be suppressed, problems in the related art were effectively be solved, and furthermore, excellent transparency and adhesion to glass simultaneously realized.

Specifically, the present invention provides an ionomer composition containing a sodium ionomer; and a masterbatch containing a zinc ionomer and a coupling agent. Specifically, the sodium ionomer is contained in a higher content than the zinc ionomer.

According to an exemplary embodiment, the sodium ionomer and the zinc ionomer may be each independently an ethylene-(meth)acrylic acid ionomer. In addition, the (meth)acrylic acid may be acrylic acid or methacrylic acid.

According to an exemplary embodiment, the sodium ionomer may be a sodium-neutralized ethylene-(meth)acrylic acid ionomer. Specifically, the sodium-neutralized ethylene-(meth)acrylic acid ionomer may contain a repeating unit of (meth)acrylic acid in an amount of 1 to 40 wt%, specifically, 5 to 30 wt%, and more specifically, 10 to 25 wt%.

In addition, the sodium ionomer, specifically, the sodium-neutralized ethylene-(meth)acrylic acid ionomer may have a degree of neutralization with sodium metal of 5 to 70mol%, specifically, 10 to 60mol%, and more specifically, 20 to 50mol%.

According to an exemplary embodiment, the sodium ionomer may have a melt flow index of 0.1 to 10 g/10 min., and specifically, 1 to 5 g/10 min., when measured at a temperature of 190°C and a load of 2.16 kg according to ASTM D1238.

According to an exemplary embodiment, when the sodium ionomer is in a form of a film having a thickness of 1 mm, the sodium ionomer may have a haze of 0.01 to 5%, and specifically, 0.1 to 2%, when measured according to ASTM D1003.

According to an exemplary embodiment, the zinc ionomer may be a zinc-neutralized ethylene-(meth)acrylic acid ionomer. Specifically, the zinc-neutralized ethylene-(meth)acrylic acid ionomer may contain a repeating unit of (meth) acrylic acid in an amount of 1 to 40 wt%, specifically, 5 to 30 wt%, and more specifically, 10 to 25 wt%.

According to an exemplary embodiment, the zinc ionomer, specifically, the zinc-neutralized ethylene-(meth)acrylic acid ionomer may have a degree of neutralization with zinc metal of 5 to 50mol%, specifically, 10 to 40mol%, and more specifically, 15 to 30mol%.

According to an exemplary embodiment, the zinc ionomer may have a melt flow index of 0.1 to 30 g/10 min., and specifically, 3 to 20 g/10 min., when measured at a temperature of 190°C and a load of 2.16 kg according to ASTM D1238.

According to an exemplary embodiment, when the zinc ionomer is in a form of a film having a thickness of 1 mm, the zinc ionomer may have a haze of 0.1 to 10%, and specifically, 0.1 to 5%, when measured according to ASTM D1003.

According to an exemplary embodiment, a weight ratio of the sodium ionomer to the zinc ionomer may be 2 to 100:1, specifically, 4 to 50:1, and more specifically, 9 to 30:1 or 4 to 20:1. In addition, a weight ratio of the sodium metal of the sodium ionomer to the zinc metal of the zinc ionomer may be 5 to 100:1, specifically, 5 to 70:1, and more specifically, 7 to 40:1. The sodium ionomer is contained in a higher content than the zinc ionomer, such that transparency and an adhesive strength to glass may be further improved.

According to an exemplary embodiment, the coupling agent may contain an alkoxysilane-based compound. Specifically, the alkoxysilane-based compound may contain a C₁₋₅ alkoxy group or a C₁₋₃ alkoxy group, and may further contain one or more functional groups selected from an amino group, an epoxy group, and a thiol group. More specifically, the alkoxysilane-based compound may be a compound containing an amino group and a C₁₋₅ alkoxy group.

According to an exemplary embodiment, the alkoxysilane-based compound may be one or a combination of two or more selected from 3-aminopropyldimethoxymethylsilane, 3-aminopropyldiethoxymethylsilane, aminopropyldimethoxyethylsilane, aminopropyldiethoxyethylsilane, aminopropyldimethoxypropylsilane, and aminopropyldiethoxypropylsilane, and specifically, may be 3-aminopropyldiethoxymethylsilane.

According to an exemplary embodiment, the coupling agent may be contained in an amount of 0.01 to 10 parts by weight, specifically, 0.1 to 5 parts by weight, and more specifically, 0.5 to 3 parts by weight, with respect to 100 parts by weight of the zinc ionomer. In addition, the coupling agent may be contained in an amount of 0.005 to 1 part by weight, specifically, 0.01 to 0.5 parts by weight, and more specifically, 0.05 to 0.3 parts by weight, with respect to 100 parts by weight of the sodium ionomer.

According to an exemplary embodiment, the masterbatch may be contained in an amount of 1 to 50 parts by weight, specifically, 3 to 40 parts by weight, and more specifically, 5 to 30 parts by weight or 5 to 12 parts by weight, with respect to 100 parts by weight of the sodium ionomer.

According to an exemplary embodiment, the ionomer composition may further contain one or more additives including an antioxidant, an ultraviolet absorber, a light stabilizer, an anti-blocking agent, a pigment, a dye, and a heat shielding material (infrared absorber), or a mixture thereof.

According to an exemplary embodiment, the ionomer composition may have a melt flow index of 0.5 to 10 g/10 min., specifically, 0.8 to 7 g/10 min., and more specifically, 1 to 5 g/10 min., when measured at a temperature of 190°C and a load of 2.16 kg according to ASTM D1238. An ionomer composition according to the related art has a problem in that the melt flow index is rapidly reduced due to an excessive crosslinking side reaction, and on the other hand, the ionomer composition according to an exemplary embodiment may realize excellent processability by solving this problem.

According to an exemplary embodiment, the ionomer composition may be widely applied in the field of transparent materials requiring transparency and adhesion to glass, such as an intermediate layer of laminated glass, an encapsulation layer of a solar cell, and a transparent container.

According to an exemplary embodiment, the ionomer composition may have a (glass) adhesive strength to glass of 50 N/cm or more, specifically, 60 N/cm or more, and more specifically, 70 N/cm or more or 75 N/cm or more, when measured at a thickness of 1 mm. An upper limit thereof may be 200 N/cm or less. The ionomer composition according to an exemplary embodiment may have an improved (glass) adhesive strength than that of the sodium ionomer.

According to an exemplary embodiment, when the ionomer composition is in a form of a film having a thickness of 1 mm, the ionomer composition may have a haze of 2% or less, specifically, 1% or less, and more specifically, 0.8% or less, 0.7% or less, or 0.01 to 0.5%, when measured according to ASTM D1003. The ionomer composition according to an exemplary embodiment has an advantage that an increase in haze value may be effectively suppressed compared to the related art.

The present invention further provides an ionomer film produced using the ionomer composition according to the invention. The ionomer film may have a thickness of 1 µm to 500 mm or 10 µm to 10 mm.

The present invention yet further provides a glass laminate including: a first glass; an intermediate layer provided on the first glass and formed using the ionomer composition of the invention; and a second glass provided on the intermediate layer.

Commonly known types of glass may be used independently as the first glass and the second glass, a thickness of each of the first glass and the second glass may be, for example, 1 mm to 50 cm. The first glass and the second glass may be each independently subjected to an additional treatment to have a surface with an improved adhesive strength.

The intermediate layer may be formed using the ionomer composition described above, and may exhibit excellent transparency and adhesion to glass. A thickness of the intermediate layer may be, for example, 10 µm to 100 mm. The intermediate layer may be interposed between glasses and may serve to bond the glasses to each other.

The method of producing a glass laminate may include interposing a film formed using the ionomer composition described above between the first glass and the second glass and then applying energy such as heat to adhere the film, but may be performed according to a commonly used or known method.

The present invention provides a method of preparing an ionomer composition, the method including: (a) preparing a masterbatch by melt-kneading a composition containing a zinc ionomer and a coupling agent; and (b) melt-kneading a sodium ionomer and the masterbatch.

According to an exemplary embodiment, the step (a) is a step of preparing a masterbatch containing a zinc ionomer and a coupling agent, and may include melt-kneading a composition containing a zinc ionomer and a coupling agent at a temperature of 100 to 250°C, and specifically, 120 to 200°C. Accordingly, the masterbatch is in a state in which the coupling agent is uniformly dispersed inside the zinc ionomer, and the coupling agent is not simply present on a part or surface of the zinc ionomer, but the zinc ionomer serves as a carrier for the coupling agent, thereby significantly improving dispersibility of the coupling agent. Furthermore, the zinc ionomer serves as a carrier for the coupling agent, such that an excessive crosslinking side reaction that may occur between the sodium ionomer and the coupling agent in the subsequent step (b) may be effectively suppressed. Through this, the ionomer composition according to an exemplary embodiment may simultaneously realize excellent transparency and adhesion (to glass). In addition, in the process of preparing a masterbatch, a commonly used or known method or a processing method such as extraction or injection may be used.

According to an exemplary embodiment, the step (b) is a step of preparing an ionomer composition by mixing the masterbatch prepared in the step (a) with a sodium ionomer, and specifically, may include melt-kneading the sodium ionomer and the masterbatch at a temperature of 130 to 300°C, specifically, 150 to 280°C, and more specifically, 180 to 250°C. In addition, in the process of preparing an ionomer composition, a commonly used or known method or a processing method such as extraction or injection may be used.

According to an exemplary embodiment, the melt-kneading temperature during the masterbatch preparation in the step (a) may be lower than the melt-kneading temperature in the step (b), a difference between these temperatures may be 10 to 150°C, specifically, 15 to 120°C, and more specifically, 20 to 80°C. Through this, an ionomer composition having further improved transparency may be prepared.

In addition, the method of preparing an ionomer composition may further include molding the prepared ionomer composition into a film or a sheet, and the molding may be performed by using a commonly used or known method or a processing method such as extraction or injection.

Hereinafter, the present invention will be described in more detail with reference to Example and Comparative Examples.

Physical properties in the following Example and Comparative Examples were measured by the following methods.

### [Methods for Evaluating Physical Properties]

### 1. Melt Flow Index (MFI) [g/10 min.]

A melt flow index (MFI) was measured at a temperature of 190°C and a load of 2.16 kg according to ASTM D1238.

### 2. Haze [%]

A haze of the ionomer film (thickness: 1 mm) produced in Example or each of Comparative Examples was measured with a hazemeter (NDH-8000, manufactured by Nippon Denshoku industries Co., Ltd.) according to ASTM D1003.

### 3. Adhesive Strength [N/cm]

The ionomer film (thickness: 1 mm, width: 5 cm, length: 8 cm) produced in Example or each of Comparative Examples and a Teflon film were sequentially placed on a glass plate (width: 7 cm, length: 10 cm, thickness: 2 cm), and the films were pressurized in a vacuum lamination apparatus at a temperature of 125°C and a pressure of 12.5 MPa for 30 minutes. Subsequently, the sample was taken out from the apparatus, the Teflon film of the produced glass laminate was removed and allowed to stand in an oven at 25°C and 50 RH% for 24 hours, and then the ionomer film adhering to the glass plate was cut to have a width of 1 cm, thereby preparing a test sample. An adhesive strength between the glass plate and the ionomer film of the prepared sample was measured. UTM (INSTRON 5965) was used as a measuring apparatus, and the measurement was performed under conditions of T type (angle: 180°) and a peeling rate of 200 mm/min.

### - Preparation of Masterbatch

### [Preparation Example 1]

A composition containing 3-aminopropyldiethoxymethylsilane in an amount of 1 part by weight with respect to 100 parts by weight of a zinc-neutralized ethylene acrylic acid ionomer (acrylic acid: 13.5 wt%, a degree of neutralization with zinc: 15mol%) was added to a single-screw reaction extruder, and the composition was melt-extruded at 180°C and 30 rpm, thereby preparing masterbatch chips of Preparation Example 1.

### [Preparation Example 2]

Masterbatch chips were prepared in the same manner as that of Preparation Example 1, except that the same amount of a sodium-neutralized ethylene acrylic acid ionomer (acrylic acid: 13.5 wt%, a degree of neutralization with sodium: 31mol%) was used instead of the zinc-neutralized ethylene acrylic acid ionomer.

### - Preparation of Ionomer Composition

### [Example 1]

A composition containing 900 g of a sodium-neutralized ethylene acrylic acid ionomer (acrylic acid: 13.5 wt%, a degree of neutralization of sodium: 31mol%) and 100 g of the masterbatch of Preparation Example 1 was added to a T-die single-screw reaction extruder, and the composition was melt-extruded at 230°C and 30 rpm, thereby producing an ionomer film having a thickness of about 1 mm. In addition, an ionomer strand was produced by the same extrusion process by changing a die of a discharge port of the extruder from a T-die to a circular hole die.

### [Comparative Example 1]

A composition containing 1,000 g of a zinc-neutralized ethylene acrylic acid ionomer (acrylic acid: 13.5 wt%, a degree of neutralization with zinc: 15mol%) and 1 g of 3-aminopropyldiethoxymethylsilane was added to a single-screw reaction extruder, and the composition was melt-extruded at 230°C and 30 rpm, thereby producing an ionomer film having a thickness of about 1 mm. In addition, an ionomer strand was produced by the same extrusion process as that of Example 1.

### [Comparative Example 2]

An ionomer film and an ionomer strand were produced in the same manner as that of Example 1, except that the same amount of the masterbatch of Preparation Example 2 was used instead of the masterbatch of Preparation Example 1.

### [Comparative Example 3]

An ionomer film and an ionomer strand were produced in the same manner as that of Comparative Example 1, except that a composition containing 900 g of a sodium-neutralized ethylene acrylic acid ionomer, 100 g of a zinc-neutralized ethylene acrylic acid ionomer, and 1 g of 3-aminopropyldiethoxymethylsilane was used.

The melt flow indices of the ionomer compositions, the hazes and adhesive strengths of the ionomer films, and the surfaces of the ionomer strands according to Example 1 and Comparative Examples 1 to 3 were measured. The results are shown in Table 1.

In addition, the surface of the ionomer strand was evaluated by touch according to a degree of roughness of the surface as poor (the case where the degree of roughness was significantly felt), good (the case where the degree of roughness was weakly felt), or excellent (the case where degree of roughness was barely felt).

**[Table 1]**

| | Example 1 | Comparative Example 1 | Comparative Example 2 | Comparative Example 3 |
|---|---|---|---|---|
| Melt flow index (g/10min.) | 1.21 | 6.3 | 0.89 | 0.81 |
| Haze (%) | 0.52 | 0.79 | 0.68 | 0.75 |
| Adhesive strength (N/cm) | 77.9 | 78.6 | 51.3 | 67.2 |
| strand surface | Excellent | Good | Poor | Poor |

As shown in Table 1, when an ionomer composition was prepared by first preparing a masterbatch containing a zinc ionomer as a carrier resin of a coupling agent, and then adding the masterbatch to a sodium ionomer, the ionomer composition had an excellent melt flow index, and an ionomer film obtained using the same had an excellent adhesive strength to glass and a low haze value.

In particular, all of the hazes measured in Comparative Examples 1 to 3 were higher than that of Example due to an excessive crosslinking reaction, an excessively high melt flow index was measured in Comparative Example 1, and a low adhesive strength and a poor strand surface were measured in Comparative Examples 2 and 3. It was confirmed that these ionomer compositions of Comparative Examples were limited to be used in an intermediate layer of laminated glass, a solar cell encapsulation layer, and a transparent material requiring transparency, but the masterbatch described above was used in the ionomer composition according to an exemplary embodiment, such that an excellent adhesive strength to glass, a low haze, and excellent moldability were realized.

The present invention relates to a sodium ionomer composition having an excellent adhesive strength to glass, and a masterbatch obtained by melt-kneading a zinc ionomer and a coupling agent is used, such that a crosslinking side reaction, which has been a problem in the related art, may be effectively suppressed. Therefore, the ionomer composition has an effect of significantly improving transparency, processability, and an adhesive strength to glass in comparison to the related art.

## Claims

1. An ionomer composition comprising:
a sodium ionomer; and
a masterbatch comprising a zinc ionomer and a coupling agent,
wherein the sodium ionomer is comprised in a higher content than the zinc ionomer.

2. The ionomer composition of claim 1, wherein the sodium ionomer and the zinc ionomer are each independently an ethylene-(meth)acrylic acid ionomer.

3. The ionomer composition of any preceding claim, wherein the zinc ionomer has a degree of neutralization with zinc metal of 5 to 50mol%, optionally, the sodium ionomer has a degree of neutralization with sodium metal of 10 to 60mol%.

4. The ionomer composition of any preceding claim, wherein a weight ratio of the sodium ionomer to the zinc ionomer is 4:1 to 20:1.

5. The ionomer composition of any preceding claim, wherein the coupling agent contains an alkoxysilane-based compound, optionally, the alkoxysilane-based compound contains an amino group and a C₁₋₅ alkoxy group, optionally, the alkoxysilane-based compound is one or a combination of two or more selected from aminopropyldimethoxymethylsilane, aminopropyldiethoxymethylsilane, aminopropyldimethoxyethylsilane, aminopropyldiethoxyethylsilane, aminopropyldimethoxypropylsilane, and aminopropyldiethoxypropylsilane.

6. The ionomer composition of any preceding claim, wherein the coupling agent is contained in an amount of 0.1 to 5 parts by weight with respect to 100 parts by weight of the zinc ionomer.

7. The ionomer composition of any preceding claim, wherein the masterbatch is contained in an amount of 5 to 30 parts by weight with respect to 100 parts by weight of the sodium ionomer.

8. The ionomer composition of any preceding claim, wherein the ionomer composition has a melt flow index of 0.5 to 10 g/10 min. when measured at a temperature of 190°C and a load of 2.16 kg according to ASTM D1238.

9. The ionomer composition of any preceding claim, wherein the ionomer composition is used for an intermediate layer of laminated glass.

10. The ionomer composition of any preceding claim, wherein the ionomer composition has an adhesive strength to glass of 50 N/cm or more when measured at a thickness of 1 mm.

11. The ionomer composition of any preceding claim, wherein when the ionomer composition is in a form of a film having a thickness of 1 mm, the ionomer composition has a haze of 0.7% or less when measured according to ASTM D1003.

12. A glass laminate comprising:
a first glass;
an intermediate layer provided on the first glass and formed using the ionomer composition of any one of claims 1 to 11; and
a second glass provided on the intermediate layer.

13. A method of preparing an ionomer composition, preferably an ionomer composition according to any one of claims 1 to 11, the method comprising:
(a) preparing a masterbatch by melt-kneading a composition containing a zinc ionomer and a coupling agent; and
(b) melt-kneading a sodium ionomer and the masterbatch.

14. The method of claim 13, wherein in the step (a), the masterbatch is in a state in which the coupling agent is uniformly dispersed inside the zinc ionomer.

15. The method of claim 13 or 14, wherein a melt-kneading temperature in the step (a) is lower than a melt-kneading temperature in the step (b).
